# EUROPEAN PATENT SPECIFICATION

(11) **EP 0 635 211 B1**
(45) Date of publication and mention of the grant of the patent: **09.09.1998**
(21) Application number: 94101234.6
(22) Date of filing: 28.01.1994
(51) Int. Cl.: A22C 13/00

(54) **Fibrous food casings having modified release properties and methods of manufacture**
Faserige Nahrungsmittelhülle mit verbesserten Abschälungseigenschaften und Verfahren zur Herstellung davon
Enveloppes fibreuses pour aliments ayant des propriétés de décollage améliorées et leur procédé de fabrication

(30) Priority: 23.07.1993 US 96320
(43) Date of publication of application: 25.01.1995
(73) Proprietor: Devro-Teepak, Inc., Westchester, IL 60154 (US)
(72) Inventor: Verschueren, Eric M.J., B-2350 Vosselaar (BE); Fichtner, Reinhard, B-3290 Diest (BE)
(74) Representative: Weber, Dieter, Dr.

(56) References cited:
- EP-A- 0 459 040
- FR-A- 1 558 603
- GB-A- 1 091 105
- US-A- 3 378 379

## Description

### TECHNICAL FIELD

The present invention relates generally to improved food packaging films, and more specifically, to fibrous reinforced food casings having modified release/cling properties for packaging meat products, and particularly in manufacturing and packaging dry and semi-dry sausage products.

### BACKGROUND OF THE INVENTION

In the manufacture of processed sausage products, a meat emulsion is prepared from comminuted meat together with fillers, seasonings, spices, etc. A tubular food casing, such as one containing nonedible cellulose, is loaded onto the stuffing horn of a filling machine and stuffed with the meat emulsion. In the case of small sausage products, like frankfurters, the filled casings are twisted, tied or clipped into suitable links at predetermined intervals and further processed. For larger sausage products, like bologna, salami, and the like, the meat emulsion is introduced into larger heavier walled casings or casings having fibrous reinforcements, and formed into chubs or lengthy individual sausage sticks or logs for further processing, e.g. cooking and smoking.

One category of larger meat products includes the so called dry or semi-dry sausages, sometimes referred to as cervelats or summer sausage, which includes such representative examples as air dried pepperoni, soft salami, hard or dry salami, and the like. As the name suggests, this type of sausage has a reduced moisture content, and its preparation usually includes drying as one step in its manufacture. Dry sausage can also have a lower fat content than other types of sausage products, and depending on the particular type, may also be smoked. Cooking can also be performed in some instances during the smoking step.

Food casings employed in packaging and processing dry or semi-dry sausage products are usually fibrous type casings consisting of a fibrous reinforcement in the form of a web, usually a paper, formed and seamed into a tubular body, impregnated with viscose solution and regenerated *in-situ*. Because the encased meat mass of dry or semi-dry sausage products undergo shrinkage during processing and drying, dry sausage casings preferably have an affinity for the encased meat mass. That is, unless the dry sausage casing adheres to the meat mass during processing and drying, separation between the meat mass and the side wall of the casing occurs which increases the potential for mold growth, and a final product having an unappetizing appearance. Such products not only have poor customer acceptance, but can also have shorter shelf-life expectancies.

To help overcome the foregoing separation problem with dry/semi-dry sausage products, fibrous regenerated cellulose casings have been developed with polymeric coatings consisting of thermosetting resins to enhance the cling or adherence properties between the meat mass and the inner side wall of the casing. One such example is disclosed in U.S. Pat. 3,378,379 which teaches a dry fibrous sausage casing having a cationic thermosetting resin coating on the casing surface in contact with the packaged meat.

While the coated casings of U.S. Pat. 3,378,379 may be useful in allowing the passage of moisture from the meat mass during drying, ingress of smoke to the meat during smoking, and adhere to the meat mass and shrink as the meat loses moisture, such casings and methods of manufacture have not been entirely satisfactory for all types of dry sausage products. In this regard, it was found that dry sausage type fibrous casings, including the type of casings coated according to the methods of U.S. Pat. 3,378,379 with cationic thermosetting resins, can exhibit excessively high cling characteristics, and cannot be readily used with all types of dry sausage recipes because of an imbalance between cling/adherence and release properties.

For example, certain dry sausage recipes, like dipped style products favored by many Europeans require partial removal of casing by meat processors during the latter stages of preparation after cooking and drying. For this to readily occur, the dry sausage casing must have a sufficiently low level of cling to permit easy manual peeling of the casing from the meat mass without damaging the product. In preparing dipped style dry sausage the casing is entirely removed, except for the end portion holding the support string or metal end-closure cap for suspending the product during the final stages of processing. The remaining unpeeled casing end must continue to adhere to the meat mass for support and prevent falling to the floor during the final stages of processing, e.g. dipping into gelatin and condiments, e.g. pepper, cheese, roasted onions, etc. Hence, for such dry sausage recipes packaging films/casings require a balance of both cling/adherence properties and release characteristics. Too much cling and not enough release will make manual peeling a slow, arduous task for high production efficiency. Whereas, too high release and not enough cling will make the dipping process difficult to perform.

U.S. Pat. 3,378,379 discloses methods for enhancing the cling properties of dry sausage casing by applying internal coatings of cationic thermosetting resin by the known "slugging" or "bubble" technique. Following impregnation of the fibrous tubular web with viscose solution by drawing through an annular die; regeneration of the casing and passage through a glycerin/water bath, an aqueous solution of the thermosetting resin is introduced through a cut in the casing by known methods, e.g. U.S. 3,378,379, which resin is maintained between rolls of the coating station. The regenerated casing is continuously drawn between the rolls where the interior wall of the casing is automatically coated with the resin solution. Squeeze rolls remove excess resin from collecting on the casing interior wall. Following coating, the casing is drawn through a drying chamber where it is inflated by a bubble of air and dried.

While the bubble technique may be widely practiced in applying release/cling coatings to casing surfaces it has several shortcomings. The bubble method is dependent on many process variables making it difficult to achieve product uniformity and quality control. This is due to such variables as rate of casing travel; initial concentration of the coating solution; rate of exhaustion and depletion of resin from the coating solution; amount of pressure applied by the squeeze rolls, etc. Such factors determine the amount of resin with which the inner wall of the casing will be coated and the frequency with which the coating composition will require replenishing. Liquid transfer from tanks can also dilute the bubble in standard operations. Because the resin in solution between the rolls is constantly being depleted from the casing interior the coating being applied lacks uniformity and produces a "two side effect", i.e. different meat cling over the circumference of the casing. The bubble method of coating can also result in "roping" and "carry over" of the casing where multiple folds of casing prevent removal of chemicals.

EP-A-0 459 040 discloses a bonding agent for fibrous substrates used to reinforce food casings that comprise a fibrous base web. The bonding agent contains up to 10 wt.% of cellulose carbamate and an alkaline curing resin, the ratio of carbamate to resin being greater than 1 : 1.

Accordingly, there is a need for modified fibrous type food casings particularly for dry and semi-dry sausage products which offer a better balance between adherence/cling and release properties. In particular, there is need for more efficient methods of preparing fibrous casings with low cling properties where such properties can be replicated with better quality control and uniformity between production runs through less manual handling (bubble changes), automatic dosing of the adhering agent, and more consistent amounts of adhering agent being applied.

### SUMMARY OF THE INVENTION

It is therefore a general object of the invention to provide for fibrous reinforced food packaging films, and particularly food casings having modified cling or release properties with the foodstuff packaged therein.

More specifically, it is a principal object of the invention to provide for fibrous reinforced food packaging films, including tubular food casings having cling/adherence properties which are especially useful in packaging dry or semi-dry sausage or summer sausage products, such as pepperoni, hard and semi-soft salamis, and the like.

It is yet a further object to provide for novel fibrous food casings for facilitating the production of special dry sausage recipes requiring reduced levels of cling, or more balance between adherence/cling and release properties with the packaged foodstuff.

These objects are solved by a food packaging film according to claim 1, which is prepared by the method of claim 6.

The invention contemplates casings being supplied as relatively short individual precut lengths of flat, unshirred tubular material, as well as extended lengths of flat unshirred tubular material wound on large storage and dispensing reels. The present invention also contemplates tubular casings pleated into shirred strands or sticks for convenient handling and efficient production during stuffing operations.

The regenerated cellulose packaging films and casings comprise a fibrous reinforcement, typically paper, which is impregnated with a novel coating composition. The composition prior to being applied to the reinforcement comprises viscose solution in admixture with a food grade cationic polymeric adhering agent for imparting cling between the film/casing and food product engaged therewith. That is, instead of applying the thermosetting resin as a separate coating to the web after impregnation and regeneration of a viscose-containing web it was discovered that desirable cling/adhering properties can be imparted to the film in a single step by injecting the resin into the viscose solution prior to impregnating the fibrous reinforcement. Thus, the resin is applied as a component of the viscose solution in the form of an admixture simultaneously during impregnation of the fibrous web.

It was also found that fibrous webs impregnated with viscose-containing compositions as disclosed herein together with a food grade cationic polymeric adhering agent imparts a more uniform and reduced level of cling/adherence between the packaging film and meat mass than other known regenerated cellulose casings having separate coatings of such agents.

For purposes of the present invention, expressions such as "reduced" or "low level cling properties" are intended to refer to casings of this invention which readily allow manual separation from a processed or partially processed and packaged meat product without damaging the meat mass during removal. End portions of casing remaining in-tact are capable of supporting the weight of the meat product without premature separation from the meat mass.

The casings have a fibrous reinforcement comprising a generally tubular shaped web having interior and exterior walls with at least the interior wall being uniformly impregnated with the coating composition. Advantageously, casings impregnated with the compositions have more evenly applied cling type resins. The casings can be more readily separated and removal facilitated from the meat product during processing than regenerated cellulose casings prepared with similar type resins, but applied as separate coatings, such as by the bubble technique. The food grade polymeric adhering agent is present in the viscose-containing coating composition in a sufficient amount to impart low level cling properties to the film when in contact with the foodstuff. More specifically, the coating composition comprises from about 0.01 to less than about 0.75 percent by weight of a food grade cationic polymeric adhering agent which may be an epoxy substituted polysecondary amine, or alternatively, a melamine-formaldehyde polymer.

It is yet a further object of the invention to provide for a method of preparing regenerated cellulose food casings having a fibrous reinforcement in the form of a tubular body with interior and exterior wall surfaces by the steps of impregnating the surfaces with a viscose solution and regenerating the casing, wherein the improvement comprises the steps of forming a coating composition comprising an admixture of the viscose solution and a food grade cationic polymeric adhering agent for imparting to the casing cling properties for the food product packaged therein, and impregnating the surfaces of the fibrous reinforcement with the composition prior to regeneration.

These and other objects, features and advantages will become more apparent from a reading of the following more detailed description of the invention.

### DESCRIPTION OF THE PREFERRED EMBODIMENTS

The preferred embodiments of the invention relate principally to fibrous reinforced food casings, mainly for semi-dry and dry sausage products. The casings comprise a tubular shaped fibrous web of conventional form having an interior and exterior side wall impregnated with a coating composition. The coating composition comprises a viscose solution in the form of an admixture with a cationic polymeric adhering agent for imparting cling properties for a food to be stuffed therein. Optionally, but preferably it will be more convenient to have both the interior and exterior side walls of the casing impregnated with the coating composition containing the cationic polymeric adhering agent.

Generally the fibrous reinforcements for the casings are prepared from fibers approved for use in food wrapping applications. Although not limited to, they include for instance, any cellulosic material, and particularly high strength fibers, as for example, Philippine hemp fibers, cotton fibers, wood fibers, and their derivatives. Embodiments of fibrous reinforcements are intended to include naturally occurring cellulosic material impregnated in slurry form, but more preferably in the form of a web. That is to say, one embodiment involves food wrappings prepared with webs or sheets of woven, but preferably nonwoven fibers which includes various types of paper and paper products. In most instances, the reinforcement of choice is the most economic fibrous web which will impart the required strength and other characteristics which are consistent with the properties of the casings described herein. Other desirable reinforcements may be prepared in addition to those mentioned above. They include mixtures of Philippine hemp fibers with long fibered soft wood fibers, or mixtures of soft wood fibers with synthetic rayon paper making fibers or textile rayon fibers, etc. Synthetic webs prepared from woven, nonwoven, and even spun fibers like polyesters, such as available under the DuPont trademark "Reemay"; or various polyamides like nylon 6; nylon 6,6, etc., may also be employed.

The binder for impregnation of the fibrous reinforcement is a composition comprising viscose solution in combination with the cationic polymeric adhering agent. The latter being present in a sufficient amount to impart low level cling/adherence properties to the casing when in contact with a meat mass, e.g. sausage emulsion. As previously discussed, low levels of cling are intended to denote that amount of adherence which enables facilitating manual separation of the casing from the meat mass, which may be partially processed. The process of separation and removal of the casing is facilitated without stripping meat from the surface of the meat mass. Adherence characteristics, i.e. cling and release, should be sufficiently balanced, so end portions of the casing, for example, remaining on the meat mass after partial peeling have sufficient cling to remain in tact for support of the meat mass during any remaining processing steps, such as dipping without prematurely separating.

It has been found that coating compositions having from about 0.01 to less than about 0.75, and even more preferably from about 0.01 to about 0.5 percent by weight or less of polymeric adhering agent when applied according to the methods of this invention will impart the desired low levels of cling.

Preferred polymeric adhering agents include certain food grade thermosetting aldehyde polymers like the amino resins, such as melamine formaldehyde polymers. They are commercially available from American Cyanamide under such trademarks as Accobond. Accobond 3524, for example, is a highly methylolated melamine-formaldehyde precondensate. Other suitable polymeric adhering agents include, but are not limited to glutaraldehyde, and particularly the water soluble epoxy-substituted polysecondary amine thermosetting resins. Generally, they are condensates of epichlorohydrin and a polyamide. That is oligomers or higher molecular weight resinous materials having a plurality of secondary amine groups, e.g. polyamide amines, polyurea amines, and the like. The epoxy substituted polysecondary amine cationic thermosetting adhering agents are preferably condensation products of epichlorohydrin and a polyamine prepolymer formed from a dicarboxylic acid, such as adipic acid, glutaric acid and succinic acid, and a diethylenetriamine. Variations of the epoxy substituted polysecondary amines may be useful adhering agents by modifying the internal structure of the diethylenetriamine and/or by employing alternative dicarboxylic acids, such as those mentioned above. Particularly useful cationic thermosetting adhering agents are commercially available from Hercules, Inc., under the trademark Kymene®, e.g. grade 557. Such products are also known as Hercules Resin 2000 or Resamine® which are also water soluble thermosetting cationic polymers, i.e. reaction products of epichlorohydrin and adipic acid-diethylenetriamine polyamide.

Causticized viscose solutions typically have high pHs in the range of about 9 to 12. To prevent pH shock between the lower pH polymeric adhering agent and viscose solution it has been found advantageous to buffer the compositions to a pH generally in the range from about 7.5 to about 9.5, and more preferably, to pHs from about 8 to about 9 with ammonia solution (26 percent).

The regenerated cellulosic fibrous food casings of the invention are manufactured using standard equipment employed by casing manufacturers. They may be prepared, for instance, by impregnating a fibrous web by extruding the viscose-containing coating compositions of the invention into a fibrous web using a coating die of conventional design, such as a double viscose coating die which continuously coats both the inner and outer sidewalls of the tubular web. The coated tubular web is then regenerated in a coagulating bath. The regenerated gel casing is then washed and plasticized, usually in a glycerine-containing bath. The plasticized gel film is inflated and passed through lengthy gas fueled hot air dryers where the moisture content of the casing is reduced to a relatively low level, e.g. 5 to 10 percent. The dried casings may be shirred into tightly compressed strands, rolled as flat stock onto reels, etc., and packaged.

In practice, the cationic polymeric adhering agent is injected into the viscose solution before being extruded into the fibrous web. This assures both even distribution of the polymeric adhering agent in the web, as well as maintenance of a constant level of polymer being applied during the coating process. As a result, the degree of cling/adherence of the casing to the meat mass is uniform over the entire circumference of the tubular casing.

While the invention has been described in conjunction with various embodiments, they are illustrative only. Accordingly, many alternatives, modifications and variations will be apparent to persons skilled in the art in light of the foregoing detailed description, and it is therefore intended to embrace all such alternatives and variations as to fall within the spirit and broad scope of the appended claims.

## Claims

1. A food tubular packaging film comprising a fibrous reinforcement which comprises a generally tubular shaped web having interior and exterior walls with at least said interior wall being uniformly impregnated with a regenerated cellulose composition, **characterized in** that the regenerated cellulose composition comprises an admixture of regenerated viscose and a food grade cationic polymeric adhering agent which imparts to said film, cling properties for a food product packaged within such film.

2. The food packaging film of claim 1 further **characterized in** that said cationic polymeric adhering agent is present in said composition in a sufficient amount to impart low level cling properties to said film when in contact with a foodstuff.

3. The food packaging film of claim 1 or 2 further **characterized in** that said regenerated cellulose composition comprises from about 0,01 to less than about 0.75 wt.% of said cationic polymeric adhering agent.

4. The food packaging film of any of the preceding claims **characterized in** that said food grade cationic polymeric adhering agent is a thermosetting material selected from the group consisting of expoxy substituted poly-secondary amines and melamine-formaldehyde polymers.

5. The food packaging film of claim 4 further **chracterized in** that said epoxy substituted polysecondary amine thermosetting polymer is a condensation product of epichlorohydrin and a polyamine prepolymer formed from a dicarboxylic acid and a diethylenetriamine.

6. A method of preparing a regenerated cellulose food casing having a fibrous reinforcement in the form of a tubular body with interior and exterior wall surfaces by the steps of impregnating said surfaces with a viscose coating solution and regenerating the viscose, **characterized in** that the viscose coating solution is formed by admixing the said viscose with a food grade cationic polymeric adhering agent for imparting to said coating cling properties for a meat product packaged therein, and impregnating the surfaces of said fibrous reinforcement with said coating composition prior to regeneration.

7. The method of claim 6 wherein said viscose coating solution is buffered to a pH in the range from about 7.5 to about 9.5

## Patentansprüche

1. Schlauchförmige Nahrungsmittelverpackungsfolie mit einer Faserverstärkung, die ein allgemein schlauchförmiges Bahnmaterial mit Innen- und Außenwänden umfaßt, wobei wenigstens die Innenwand gleichmäßig mit einer regenerierten Zellulosezusammensetzung imprägniert ist, **dadurch gekennzeichnet**, daß die regenerierte Zellulosezusammensetzung ein Gemisch von regenerierter Viskose und eines kationischen polymeren Haftungsmittels von Nahrungsmittelqualität, welches der Folie Anhaftungseigenschaften für ein mit einer solchen Folie verpacktes Nahrungsmittelprodukt verleiht, umfaßt.

2. Nahrungsmittelverpackungsfolie nach Anspruch 1, weiterhin **dadurch gekennzeichnet**, daß das kationische polymere Haftungsmittel in der Zusammensetzung in einer ausreichenden Menge vorliegt, um der Folie, wenn sie in Berührung mit einem Nahrungsmittel steht, einen niedrigen Grad von Anhaftungseigenschaften zu verleihen.

3. Nahrungsmittelverpackungsfolie nach Anspruch 1 oder 2, weiterhin **dadurch gekennzeichnet**, daß die regenerierte Zellulosezusammensetzung etwa 0,01 bis weniger als etwa 0,75 Gew.% des kationischen polymeren Haftungsmittels umfaßt.

4. Nahrungsmittelverpackungsfolie nach einem der vorausgehenden Ansprüche, **dadurch gekennzeichnet**, daß das kationische polymere Haftungsmittel von Nahrungsmittelqualität ein hitzehärtbares Material ist, das aus der Gruppe ausgewählt ist, welche aus epoxysubstituierten sekundären Polyaminen und Melamin-Formaldehydpolymeren besteht.

5. Nahrungsmittelverpackungsfolie nach Anspruch 4, weiterhin **dadurch gekennzeichnet**, daß das epoxysubstituierte sekundäre Polyamin als hitzehärtbares Polymer ein Kondensationsprodukt von Epichlorhydrin und eines Polyaminvorpolymers ist, welches aus einer Dicarbonsäure und einem Diethylentriamin gebildet wurde.

6. Verfahren zur Herstellung einer Nahrungsmittelhülle aus regenerierter Zellulose mit einer Faserverstärkung in der Form eines schlauchförmigen Körpers mit Innen- und Außenwandoberflächen mit den Stufen, in denen man diese Oberflächen mit einer Viskosebeschichtungslösung imprägniert und die Viskose regeneriert, **dadurch gekennzeichnet**, daß die Viskosebeschichtungslösung durch Vermischen der Viskose mit einem kationischen polymeren Haftungsmittel von Nahrungsmittelqualität gebildet wird, um der Beschichtung Anhaftungseigenschafen für ein darin verpacktes Fleischprodukt zu verleihen, und die Oberflächen der Faserverstärkung vor dem Regenerieren mit dieser Beschichtungszusammensetzung imprägniert.

7. Verfahren nach Anspruch 6, bei dem die Viskosebeschichtungslösung auf einen pH-Wert im Bereich von etwa 7,5 bis etwa 9,5 gepuffert wird.

## Revendications

1. Film d'emballage alimentaire de forme tubulaire comprenant une armature fibreuse comportant une toile globalement tubulaire munie de parois interne et externe dont au moins ladite paroi interne est uniformément imprégnée d'une composition cellulosique régénérée, caractérisé en ce que la composition cellulosique régénrée comprend un mélange de viscose régénérée et d'un agent adhésif polymère cationique de qualité alimentaire qui confère audit film des propriétés adhésives au contact d'un produit alimentaire conditionné par un tel film.

2. Film d'emballage alimentaire selon la revendication 1 caractérisé en outre en ce que ledit agent adhésif polymère cationique est présent dans ladite composition en quantité suffisante pour conférer audit film des propriétés adhésives réduites au contact d'un produit alimentaire.

3. Film d'emballage alimentaire selon la revendication 1 ou 2 caractérisé en outre en ce que ladite composition cellulosique régénérée comprend d'environ 0,01 à moins d'environ 0,75% en poids dudit agent adhésif polymère cationique.

4. Film d'emballage alimentaire selon l'une quelconque des revendications précédentes caractérisé en ce que ledit agent adhésif polymère cationique de qualité alimentaire est un matériau thermodurcissable choisi dans le groupe constitué de polyamines secondaires à subsituants époxy et de polymères de type mélamine-formaldéhyde.

5. Film d'emballage alimentaire selon la revendication 4 caractérisé en outre en ce que ledit polymère thermodurcissable de type polyamine secondaire à substituants époxy est un produit de condensation d'épichlorhydrine et d'un prépolymère en polyamine formé d'un acide dicarboxylique et d'une diéthylènetriamine.

6. Procédé de préparation d'une enveloppe cellulosique régénérée pour aliments ayant une armature fibreuse en forme d'un corps tubulaire munie de surfaces interne et externe consistant en les étapes d'imprégnation desdites surfaces avec une solution de revêtement à base de viscose et de régénération de la viscose, caractérisé en ce que la solution de revêtement à base de viscose est formée par mélange de ladite viscose avec un agent adhésif polymère cationique de qualité alimentaire destiné à conférer audit revêtement des propriétés adhésives au contact d'un produit carné emballé dedans, et d'imprégnation des surfaces de ladite armature fibreuse avec ladite composition de revêtement préalablement à la régénération.

7. Procédé selon la revendication 6, dans lequel ladite solution de revêtement à base de viscose est tamponnée à un pH compris dans l'intervalle d'environ 7,5 à environ 9,5.
